## Europäisches Patentamt

## European Patent Office

## Office européen des brevets

(19)

(11) Veröffentlichungsnummer: **0 055 806**

A2

(12) **EUROPÄISCHE PATENTANMELDUNG**

(21) Anmeldenummer: **81108823.6**

(22) Anmeldetag: **23.10.81**

(51) Int. Cl.³: **G 06 K 17/00**

(30) Priorität: **24.10.80 DE 3040171**

(43) Veröffentlichungstag der Anmeldung:
**14.07.82 Patentblatt 82/28**

(84) Benannte Vertragsstaaten:
**CH FR GB IT LI NL**

(71) Anmelder: **Schönhuber, Max Josef, Dr.-Ing.**
**Seefeldquai 1**
**CH-8008 Zürich(CH)**

(72) Erfinder: **Schönhuber, Max Josef, Dr.-Ing.**
**Seefeldquai 1**
**CH-8008 Zürich(CH)**

(74) Vertreter: **Dorner, Jörg, Dr.-Ing. et al,**
**Landwehrstrasse 37**
**D-8000 München 2(DE)**

(54) **Datenregistriersystem zur Erfassung der Daten von bestimmten Gutmengen, insbesondere von Milchlieferungen.**

(57) Es wird ein Datenregistrierungssystem zur Erfassung der Daten von bestimmten Gutmengen, insbesondere von Milchlieferungen vorgeschlagen, die mittels eines Sammeltransportfahrzeugs eingesammelt werden sollen. Die in einem Registriergerät des Sammeltransportfahrzeugs eingegebenen Daten können auf mindestens zwei ortsfest aufgestellte Datenverarbeitungsgeräte übertragen werden, wobei eine Konvertiereinrichtung am Ort der Sammelstelle eingangsseitig die Daten der Speichermittel des Registriergerätes vom Sammeltransportfahrzeug her aufnimmt und ausgangsseitig aus der Konvertiereinrichtung körperlich entnehmbare Datenträger darbietet oder aber einen Teil der Daten auf einem körperlich entnehmbaren Datenträger darbietet, während ein anderer Teil der Daten ohne den Umweg über einen entnehmbaren Datenträger unmittelbar zu einem der Datenverarbeitungsgeräte übertragen wird.

FIG. 1

EP 0 055 806 A2

Datenregistriersystem zur Erfassung der Daten von bestimmten Gutmengen, insbesondere von Milchlieferungen.

Die Erfindung bezieht sich auf ein Datenregistriersystem
zur Erfassung der Daten von bestimmten Gutmengen, insbesondere von Milchlieferungen, welche an Lieferstellen mittels
eines Sammeltransportfahrzeugs eingesammelt und zu einer
Sammelstelle gebracht werden, mit einem im Sammeltransportfahrzeug befindlichen Registriergerät, welches Dateneingabevorrichtungen, eine damit verbundene Steuereinheit und
mit dieser gekoppelte Speichermittel enthält, ferner mit
mindestens zwei ortsfest aufgestellten Datenlese- und/oder
Datenschreib- und/oder -verarbeitungsgeräten und mit Mitteln zur Übertragung des Inhalts der Speichermittel auf die
mindestens zwei Datenlese- und/oder Datenschreib- und/oder
-verarbeitungsgeräte.

Zum besseren Verständnis der Erfindung erscheint es zweckmäßig, zunächst auf die bekannten Techniken auf dem bevorzugten Anwendungsgebiet der Erfindung, nämlich der Datenerfassung bei Milchsammeltransporten, einzugehen.

Elektronische Datenerfassungseinrichtungen zum Anbau und
Einbau in Milchsammelwagen dienen zum Einsammeln von Daten, die bei der Milchannahme jeweils anfallen. Diese Daten werden sowohl auf einem Datenträger eines Speichers gesammelt als auch in der Regel auf einem Beleg lesbar ausgedruckt. Das am Fahrzeug befindliche System enthält Dateneingabevorrichtungen, Steuermittel und Speichermittel.

Mit einfachen Codierschaltern bzw. mittels einer Eingabetastatur und/oder mittels Codekarten werden vor Tourenbeginn die sogenannten Grunddaten aufgezeichnet und gespeichert. Es sind dies u.a. die Molkereinummer, die Milchsammelstellennummer der der Molkerei zugeordneten Sammelstelle, die Milchanalysenlabornummer, die Sammeltransportfahrzeugnummer, die Fahrernummer, die Fahrtroutennummer und insbesondere das Datum sowie eventuell die Uhrzeit des Tourenbeginns.

Es werden bei der Milchannahme an der Lieferstelle jeweils anfallende Daten, die Lieferantennummer über einen Ausweiseinleser oder einen Kannencodeleser zur Kannenidentifizierung, Milchqualitätsmerkmale, etwa die Milchannahmetemperatur und diverse andere physikalisch-chemische Meßgrößen vom Ausgang entsprechender Meßwertgeber, weiter die Milchannahmemenge pro Lieferant über einen Impulsgeber, sowie gegebenenfalls die Reihenfolge einer Probeentnahme über ein Zählwerk, eingeben.

Das Registriergerät des Sammeltransportfahrzeugs enthält als Speichermittel einen Datenspeicher und eventuell einen Datenzwischenspeicher, wobei der Datenspeicher einen entnehmbaren Datenträger aufweisen kann, der vielfach in Gestalt einer Magnetbandkassette oder Metallbandkassette vorliegt. Die auf dem Datenträger gespeicherten Daten werden in der Datenverarbeitungsanlage der Molkerei oder in einem regional übergeordneten Datenverarbeitungszentrum ausgewertet und zur Milchgeldabrechnung verarbeitet.

Im Zuge der Weiterentwicklung der Speichertechnologien wurde da und dort der entnehmbare Kassettenspeicher durch immer billiger werdende, über relativ einfache Anpassungselektronik an die ohnedies vorhandenen elektronischen Funktionseinheiten mit ihren integrierten Schaltkreisen leicht ankoppelbare Halbleiterspeicher bzw. Festkörperspeicher ersetzt, welche nicht den Nachteil von Verschleiß oder notwendigem Wartungsaufwand besitzen.

Dieser Übergang zu Festspeichern ermöglichte es, die Magnetband- oder Metallband-Kassettenspeicher mit ihren verschleiß- und wartungsunterworfenen beweglichen Teilen von den einer Milchsammelstelle zugeordneten Milchsammelwagen bzw. Sammeltransportfahrzeugen zu einer einzigen, für alle Sammeltransportfahrzeuge gemeinsam zur Verfügung stehenden Konvertiereinrichtung hin zu verlagern, welche am Orte der Milchsammelstelle stationär aufgestellt wurde. Diese Konvertiervorrichtung hatte die Aufgabe, die in den Milchsammelwagen beispielsweise in Halbleiterspeichern erfaßten Daten in maschinenkompatible Speicher einzuspeichern, welche unmittelbar in der zentralen Datenverarbeitungsanlage verwertbar waren, beispielsweise also Magnetbandspeicher mit einer dem Rechner bereits angepaßten Magnetbandbreite, Diskettenspeicher usw.

Das hier einmal an der Milchsammelstelle aufzustellende Konvertiergerät macht sich bereits aus der mit der Zahl der zugeordneten Milchsammelwagen zu multiplizierenden Preisdifferenz zwischen Speichern der neuen Speichertechnologien, z. B. den Halbleiterspeichern bzw. Festkörperspeichern im Registriergerät der Milchsammelwagen einerseits und den herkömmlich an dieser Stelle verwendeten Bandspeichern andererseits sowie durch die Einsparung der bisher notwendigen Konvertiergeräte am Orte der Eingabe zur zentralen Datenverarbeitungsanlage in der Regel mehr als bezahlt.

Es sind vornehmlich zwei Formen der Informationsübertragung

bezüglich der eingesammelten Daten zwischen dem Registriergerät des Milchsammelwagens und der Milchsammelstelle bekannt. Entweder wird der entnehmbare Datenträger der Speichermittel des Registriergerätes des Milchsammelwagens entnommen und am Orte der Milchsammelstelle zur Weiterverarbeitung und Konvertierung in ein dort vorhandenes Konvertiergerät eingesetzt oder die Daten werden direkt über eine von dem Milchsammelwagen zur Milchsammelstelle installierte Leitungsverbindung während des Abtankens der Milch in die Konvertiereinrichtung am Orte der Milchsammelstelle eingelesen. Auf diese Weise wird dann an dieser Stelle ein maschinenkompatibler Datenträger erstellt. Man kommt auf diese Weise zu verschiedenen Möglichkeiten eine Teilautomatisierung der elektronischen Datenerfassung bei der Milchannahme mittels Milchsammelwagen.

Vorstehend beschriebene Maßnahmen ermöglichen noch keine vollständige Automation der Datenerfassung und Datenverarbeitung beim Einsammeln von Milch durch Sammeltransportfahrzeuge. Es ist zu berücksichtigen, daß nicht lediglich die an der Lieferstelle anfallenden Daten jeweils auf den Lieferanten bezogen an die zentrale Datenverarbeitungsanlage zu übergeben sind, sondern daß zusätzlich mindestens einige dieser Daten dem Milchproben-Analyselabor zur Verfügung gestellt werden müssen, mit den in dem Analyselabor anfallenden, weiteren Daten in Beziehung gesetzt werden müssen und dann der zentralen Datenverarbeitungsanlage ebenfalls zugeleitet werden müssen.

Eine erste, diesen Umstand berücksichtigende und eine vollständige Automation anstrebende Technik sieht vor, die einzelnen Proben enthaltende Probefläschchen individuell zu beschriften, wobei ein auf dem Fläschchen oder an dem Fläschchen angeordneter Datenträger neben den notwendigen Grunddaten oder Kopfdaten sowie Datum der Probennahme, die Probenherkunft bezeichnende Lieferantennummer und dergleichen, darüberhinaus auch die abgelieferte Milchmenge aufgezeichnet erhält. Zwar braucht man hierbei keine feste Probenflaschenreihenfolge und -anordnung vorzugeben und einzuhalten, doch ergibt sich die Notwendigkeit beispielsweise einer Magnetbandbeschriftung auf einem entlang des absolut runden Probenfläschchenumfanges angeordneten Magnetbandes mit dem zusätzlichen Nachteil, daß neben einer relativ aufwendigen Mechanik einer Probenfläschchenbewegung und einer ebenso aufwendigen Mechanik des Aufzeichnungsmechanismus jeweils zusätzlich auf jedem einzelnen Probefläschchen bzw. dessen Datenträger die kompletten Kopfdaten oder Grunddaten festgehalten werden müssen. Weiter ist der Nachteil zu nennen, daß für diese Systemtechnik nicht ausschließlich im Rechenmaschinenwesen bzw. in der einschlägigen Technik übliche Standardbausteine verwendbar sind, sondern relativ teure Sonderkonstruktionen, insbesondere auch für die Fläschchenkühlung, eingesetzt werden müssen.

Auch erfordern solche Systeme bei Ausrüstung aller im Betrieb befindlichen Milchsammelwagen eine kostspielige Umrüstung, ohne daß hierdurch die Möglichkeit geschaffen würde bzw. erhalten bliebe, im Störungsfall im dieser Systemtechnik entsprechend vergrößerten Komplex der Datenregistriereinrichtung wegen der hierbei nicht mehr fest in Stativen vorgegebenen Fläschchenreihenfolge in eine notfalls manuelle Probenahmebedienung übergehen zu können, es sei denn, man würde anstelle einer - wie ursprünglich - einfachen, manuell erstellbaren Lieferantenreihenfolgeliste jedes Probefläschchens mit den jeweiligen Grund- bzw. Kopfdaten und der jeweiligen Lieferantennummer extra von Hand kennzeichnen und kennzeichnen können, Umtriebe, die auch in der folgenden Handhabung und Bearbeitung im Analyselabor kaum praktikabel wären. Diesem Gesichtspunkt ist umsomehr Beobachtung beizumessen, mindestens für den Zeitbereich der Systemeinführung, als bereits heute in Betrieb befindliche einfache Datenerfassungsgeräte ohne eine Möglichkeit zu einem Übergang auf eine manuelle Datenaufzeichnung kaum denkbar wären.

Eine weitere Schwierigkeit liegt bei bekannten Systemen darin begründet, daß bei einer regionalen Einführung alle diejenigen Milchsammelstellen und Sammelwagen mit gleichen Systemen ausgerüstet werden müssen, damit eine jederzeit frei wählbare Milcheinsammelreihenfolge im Zuge einer Milchanlieferstrukturfortentwicklung bzw. Fahrtroutenoptimierung gegeben ist, so daß vollständig neue Systeme, seien sie auch zweckmäßiger und kostensparender, existierende Systeme nicht einmal regional ersetzen könnten.

Man hat deshalb die derartig auftretenden Schwierigkeiten dadurch einzuschränken versucht, daß die Probenfläschchen in fester relativer Lage in kranzförmiger Anordnung gehaltert und einem gemeinsamen Datenträger zugeordnet wurden, welcher sich entlang dem Umfang der Probenfläschchenhalterung erstreckte. Der Datenträger konnte die Grunddaten oder die Kopfdaten für die betreffende Gruppe von Probenfläschchen gemeinsam aufnehmen, so daß eine wiederholte Aufzeichnung dieser Grunddaten oder Kopfdaten auf einzelnen, den Probenfläschchen jeweils zugeordneten Datenträgern nicht mehr notwendig war. Trotzdem ergab sich auch hier noch der Nachteil einer gegebenenfalls vorzunehmenden, kostenaufwendigen Umrüstung der in Betrieb befindlichen Milchsammelwagen sowie der Schaffung entsprechender Sonderkonstruktionen der Datenschreib- und Leseeinrichtungen.

Beide Systeme, einmal mittels einer Fläschcheneinzelbeschriftung zum anderen mittels einer Beschriftung entlang eines am Umfang des Fläschchenkranzes angebrachten Magnetbandes eine vollständige Automatisierung der elektronischen Datenerfassung am Milchsammelwagen zu erzielen, bedingen immer noch eine voluminöse Probennahmeeinrichtung, die im einen Fall systembedingt bis zum doppelten Volumen pro Fläschchenzahl ansteigt, da sowohl für die Bereitstellung einerseits der Leerfläschchen als auch andererseits zur Abstellung der befüllten Probenfläschchen jeweils das gleiche Volumen erforderlich ist, abgesehen von dem die beiden Voluminas verbindenden Fläschchentransportkanals zur Unterbringung der Probenabfüllvorrichtung und der Einrichtung zur individuellen Beschriftung der einzelnen Probefläschchen. Bei beiden Systemen muß die diesbezügliche Magnetbandbeschriftung bzw. Informationsabspeicherung systembedingt im Probenahmefach erfolgen, also außerhalb des dafür bevorzugt geeigneten Raumes im Fahrerhaus.

Schließlich ist es aus der deutschen Offenlegungsschrift 29 13 996 bekannt, unter Steuerung durch eine Auswahlwähleinrichtung am Orte bzw. innerhalb des Registriergerätes des Milchsammelwagens zwei gesonderte Datenträger zu schaffen, welche aus dem Registriergerät entnehmbar sind und deren einer die am Analyselabor benötigten Daten der Proben bzw. der Milchlieferungen enthält und die Probenfläschchen zum Analyselabor begleitet, um dort eine Bearbeitung und/oder Ergänzung mit denjenigen Daten zu erfahren, welche, vom Analyselabor ermittelt und weitergegeben werden, während der andere Datenträger unmittelbar einer zentralen Datenverarbeitungsanlage zugeführt wird. Die Handhabung ist sowohl im Normalbetrieb wie auch im Störungsfall vergleichsweise einfach.

Dieses bekannte System vermeidet den Nachteil des Zeitaufwandes aufgrund der jeweiligen Aufzeichnung der Grunddaten auf jeden einem Probefläschchen jeweils zugeordneten Datenträger, es vermeidet den Nachteil von Sonderkonstruktionen zur Probefläschchenbeschriftung, zur Probefläschchenbewegung insbesondere auch zur Probefläschchenkühlung, es vermeidet den Nachteil einer Datenaufzeichnung außerhalb einer dafür prädestinierten Umgebung im Fahrerhaus, es vermeidet den Nachteil eines kostspieligen und problematischen Umbaues der Probennahmevorrichtungen an allen im Betrieb befindlichen Milchsammelwagen. Dieses System vermeidet darüberhinaus den Nachteil einer voluminösen Probenahmeeinrichtung und Probenahmemechanik, da die in fest vorgegebener und unverwechselbarer

Reihenfolge in standardisierten, den Analysegeräten im Analyselabor automatisch zuführbaren Stativen bündig nebeneinander aufgereihten Probefläschchen sowohl im leeren wie auch im befüllten Zustand den gleichen Platz innerhalb eines Probenkastens einnehmen. Dadurch ergibt sich ein wesentlicher arbeitssparender Vorteil für eine zu Qualitätsbeurteilung und zum Zwecke einer Untersuchung der bakteriologischen Beschaffenheit der Anliefermilch immer mehr und mehr vorgeschriebenen und eingesetzten, steril oder keimarm arbeitenden Probenabfüllung mittels einer Injektionsnadal dadurch, daß die Aufbringung sowie ebenso das Abnehmen des durchstechbaren sonst aber dichten Verschlusses für die Probefläschchen nicht mehr einzeln erfolgen muß, sondern nach Offenlegungsschrift 29 13 989 mittels einer gemeinsamen elastischen Abdichtung mit wenigen Handgriffen für alle Probefläschchen gleichzeitig erfolgen kann, daß diese Fläschchenabdichtung manipulationssicher verschlossen bzw. verplombt werden kann und daß dabei sogar maßungenaue Billigst-Probefläschchen, also ohne die strikte Einhaltung einer absoluten Kreisform und ohne Anbringung einer Magnetbandspur, Verwendung finden können, gegebenenfalls als Einwegfläschchen unter gänzlichem Wegfall einer arbeitsaufwendigen Fläschchenreinigung.

Es ergibt sich jedoch fallweise immer noch ein vermehrter technischer Aufwand dadurch, daß in dem Registriergerät jedes Sammeltransportfahrzeugs Speichermittel installiert werden müssen, welche jeweils mit den Datenlese- und/oder Datenschreib- und/oder -verarbeitungsgeräten am Orte des Analyselabors und am Orte der zentralen Datenverarbeitungsanlage kompatibel sein müssen.

Es ist daher Aufgabe der vorliegenden Erfindung, ein Datenregistriersystem der eingangs beschriebenen Art so auszugestalten, daß mit geringstmöglichem technischen Aufwand in der Sammelstelle Datenträger bzw. Datenkanäle zur Verfügung gestellt werden, welche in vielseitiger Weise mit den Datenlese- und/oder Datenschreib- und/oder -verarbeitungsgeräten, welche ortsfest installiert sind, also beispielsweise am Orte des Analyselabors und am Orte der zentralen Datenverarbeitungsanlage, kompatibel sind.

Diese Aufgabe wird erfindungsgemäß dadurch gelöst, daß die Mittel zur Übertragung des Dateninhaltes der Speichermittel des Registriergerätes des Sammeltransportfahrzeuges eine Konvertiereinrichtung enthalten, welcher eingangsseitig der Dateninhalt der Speichermittel zuführbar ist und welche ausgangsseitig diesen Dateninhalt auf gesonderten, aus der Konvertiereinheit körperlich entnehmbaren, zur Ergänzung bzw. Verarbeitung in einem jeweils zugeordneten der Datenlese- und/oder Datenschreib- und/oder -verarbeitungsgeräte bestimmten Datenträgern darbietet oder welche ausgangsseitig den einen Dateninhalt auf einen aus der Konvertiereinrichtung körperlich entnehmbaren, zur Ergänzung bzw. Verarbeitung in einem der ortsfest aufgestellten Datenlese- und/oder Datenschreib- und/oder Datenverarbeitungsgeräte zugeordneten Datenträger darbietet und den anderen Dateninhalt direkt über eine Funk- oder Leitungs- bzw. Telefonverbindung dem anderen der ortsfest aufgestellten Datenlese- und/oder Datenschreib- und/oder Datenverarbeitungsgeräte zuleitet.

Das Zurverfügungstellen von mit den Datenlese- und/oder Datenschreib- und/oder -verarbeitungsgeräten an unterschiedlichen Orten jeweils kompatiblen, vornehmlich verschiedenartigen Datenträgern geschieht also entsprechend dem vorliegenden Vorschlag nicht jeweils auf sämtlichen an dem System beteiligten Sammeltransportfahrzeugen, sondern für diese zusammengefaßt in der Konvertiereinrichtung am Orte der für die betreffende Gruppe von Sammeltransportfahrzeugen gemeinsam vorgesehenen Sammelstelle. Hieraus resultiert, daß die notwendige Konvertierung und/oder eine Datenaufzeichnung insbesondere auf Speicher mit bewegten Datenträgern in einem geschützen Bereich stattfindet, welcher nicht den rauhen bzw. aggressiven Bedingungen auf den Fahrzeugen ausgesetzt ist. Außerdem ergibt sich, worauf zuvor schon hingewiesen wurde, eine Verminderung des technischen Aufwandes.

Die Konvertiereinrichtung am Orte der Sammelstelle kann eingangsseitig ebenfalls oder die Konvertiereinrichtung und das eine der ortsfest aufgestellten Datenlese- und/ oder Datenscheib- und/oder Datenverarbeitungsgeräte getrennt, können über eine Funkverbindung, beispielsweise also drahtlos, oder über eine einfache Leitungsverbindung, beispielsweise über eine Telefonverbindung oder über eine Kabelverbindung, mit dem Registriergerät eines Sammeltransportfahrzeugs gekoppelt sein. Diese Art der Kopplung der Konvertiereinrichtung mit dem Registriergerät des Sammeltransportfahrzeugs dürfte im Sinne eines geringen apparativen Aufwandes zu bevorzugen sein.

Es ist jedoch auch möglich, die Speichermittel des Registriergerätes des Sammeltransportfahrzeuges von diesem entnehmbar und in die Konvertiereinrichtung der Sammelstelle einsetzbar auszubilden, derart, daß das Registriergerät des Sammeltransportfahrzeugs beispielsweise entsprechend der vorbekannten Konstruktion nach der deutschen Offenlegungsschrift 29 13 996 ausgestaltet ist. In diesem Falle können die Speichermittel des Registriergerätes des Sammeltransportfahrzeugs entweder einen einzigen Datenträger enthalten, auf welchem Daten mit Wegeleitadressen so gespeichert sind, daß in der Konvertiereinrichtung unter Steuerung einer Auswählein-

richtung die Verteilung auf mindestens zwei gesonderte, entnehmbare Datenträger vorgenommen werden kann, oder aber die Speicherung erfolgt bereits auf dem Sammeltransportfahrzeug auf entnehmbaren Datenträgern in solcher Weise, daß diese jeweils einzelnen und aufgrund der Verwendung von Codemarken oder dergleichen unverwechselbar in die Konvertiereinrichtung eingesetzt werden. In Letzterer erfolgt dann eine Konvertierung auf die jeweils für die weitere Datenverarbeitung beispielsweise im Analyselabor oder in der zentralen Datenverarbeitungsanlage und Abrechnungsstelle benötigte Form von Datenträgern.

Nachfolgend werden Ausführungsbeispiele unter Bezugnahme auf die Zeichnung näher erläutert. Es stellen dar:

Fig. 1 eine schematische Ansicht eines Datenregistriersystems unter symbolischer Andeutung der Wege der Datenträger,

Fig. 2 eine ähnliche Darstellung wie Figur 1 von einer gegenüber Figur 1 abgewandelten Ausführungsform und

Fig. 3 eine nochmals andere Ausführungsform unter Verwendung des Prinzips des Systems nach Figur 2.

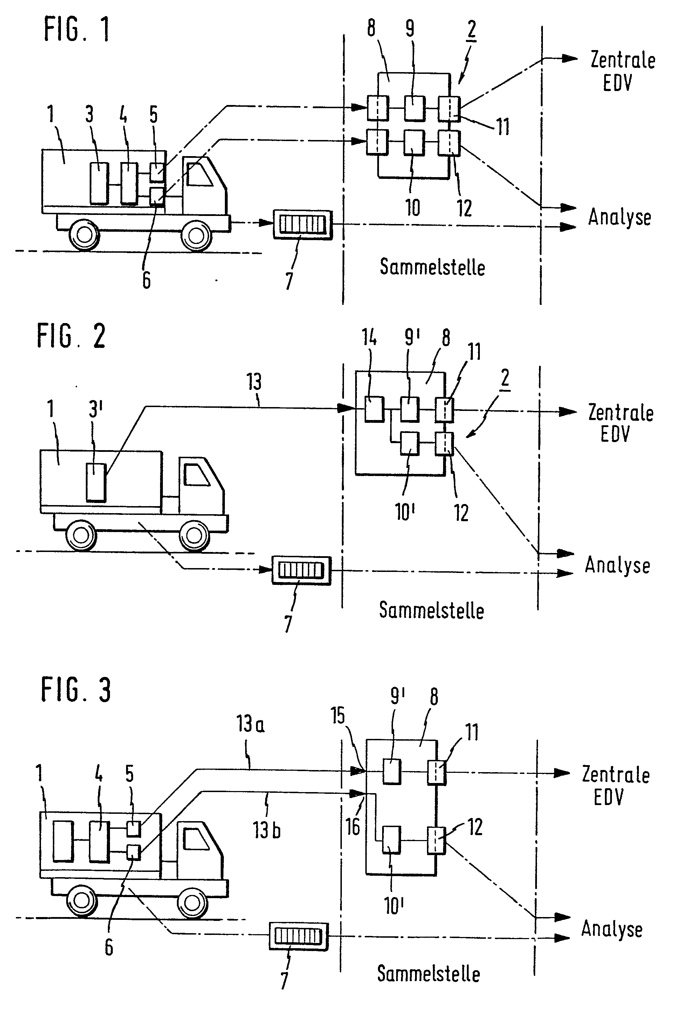

Die Milchsammelwagen 1 des Datenregistriersystems nach Figur 1 ist einer von mehreren Milchsammelwagen, welche einer Sammelstelle 2 zugeordnet sind. Der Milchsammelwagen 1 nimmt an einer Reihe von auf einer Sammeltour angefahrenen Lieferstellen bestimmte Milchmengen auf, welche in einem Registriergerät unter Verwendung einer Dateneingabevorrichtung 3 mengenmäßig erfaßt werden und gleichzeitig einer Probenahme unterzogen werden. Die
Mengenmeßdaten und bestimmte, während der Milchannahme
anfallende Daten werden unter Steuerung durch eine
Steuereinheit 4 auf zwei gesonderte Speicher 5 und 6
verteilt, welche jeweils entnehmbare Datenträger besitzen. Die Zuordnung vor und während der Milchannahme
anfallender Daten insbesondere die den Milcherzeuger
kennzeichnende Lieferantennummer zu einzelnen Proben,
welche sich im Probenfläschchen innerhalb eines Probenfläschchenhalters 7 in fester räumlicher Zuordnung befinden, geschieht durch Speicherung einer Reihenfolgenummer der Probenentnahme bzw. Probenfläschchennummer
oder Probenfläschchenadresse, zusammen mit den jeweils
zu der betreffenden Probe gehörigen Daten wie Lieferantennummer und gegebenenfalls diverser Meßdaten im Speicher 6.

Außerdem werden in den Speichern 5 und 6 bestimmte Grunddaten abgespeichert wie Datum, Milchsammelwagennummer,
Fahrernummer, Nummer einer Sammeltour und dergleichen.
Diese Grunddaten brauchen jeweils nur einmal zu Beginn
einer Sammeltour und in Zuordnung zu einer Gruppe von
Proben entsprechend der Anzahl der Probenfläschchen in
dem Halter bzw. Probenkasten 7 gespeichert werden. Im
übrigen sei bezüglich Einzelheiten auf den Inhalt der
deutschen Offenlegungsschrift 29 13 996 verwiesen.

Soll zur Vereinfachung von Herstellung, Montage, Wartung
und Lagerhaltung der Speicher 6 dem Speicher 5 gleich
sein, so ergibt sich die Schwierigkeit, daß die den
Speichern körperlich entnehmbaren Datenträger im allgemeinen mit den Datenlese- und/oder Datenschreib- und/
oder Datenverarbeitungsgeräten nicht kompatibel sind,
welche im Analyselabor zur Untersuchung der entnommenen
Proben bzw. in der zentralen Datenverarbeitungsanlage
aufgestellt sind, da die jeweils verschiedene Wege gehenden
Datenträger an den sogenannten Stellen eine jeweils unterschiedliche Handhabung und ihe Daten eine unterschiedliche Verarbeitung erfahren.

Aus diesem Grunde ist am Orte der Sammelstelle 2 eine
Konvertiereinrichtung 8 vorgesehen, welche eingangsseitig
so ausgebildet ist, daß die Datenträger der Speicher 5
und 6 des Milchsammelwagens 1 nach Entnahme von diesem
unverwechselbar an eindeutiger Stelle in die Konvertiereinrichtung 8 eingesetzt werden können, wie in Figur 1
durch strichpunktierte Linien angedeutet ist.

In der Konvertiereinrichtung vorgesehene Kontaktanordnungen stellen den Kontakt zu den jeweils eingesetzten
Datenträgern her, derart, daß den Datenträgern jeweils
zugeordnete Konvertiereinheiten 9 und 10 der Konvertiereinrichtung 8 nachgeschaltet sind. Mit Letzteren wiederum
sind in der Konvertiereinrichtung aus dieser körperlich
entnehmbare Datenträger 11 und 12 verbunden, welche im
Unterschied zu den bevorzugtermaßen identisch ausgebildeten Datenträgern der Speicher 5 und 6 nunmehr vollständig
verschieden ausgebildet sein können. So können die Datenträger der Speicher 5 und 6 beispielsweise Halbleiterspeicher oder herkömmliche Magnetbandkassetten oder
Metallbandkassetten gebräuchlicher Art sein, während der
Datenträger 11 ein Magnetband in einer in der zentralen
Datenverarbeitungsanlage verwendeten Sonderbreite sein
kann, während der Datenträger 12 eine Magnetdiskette
sein kann.

Der Datenträger 12 begleitet den Probenfläschchenhalter
bzw. Probenkasten 7 gleichsam als Analysebuch in das
Analyselabor und wird dann, gegebenenfalls nach Ergänzung
der aufgezeichneten Daten durch die Analysenergebnisse
an die zentrale Datenverarbeitungsanlage weitergereicht.

Die grundsätzliche Arbeitsweise des Datenregistriersystems nach Figur 2 entspricht derjenigen des Systems nach Figur 1. Auf den Milchsammelwagen 1 des Systems nach Figur 2 befindet sich jedoch außer den Einrichtungen zur Probenahme ein Registriergerät 3', welches zusammengefaßt eine Dateneingabevorrichtung, eine Steuereinheit und Speichermittel enthält, deren Datenträger nicht aus dem Gerät entnehmbar sind. Die Speichermittel haben vorzugsweise die Gestalt von Festkörperspeichern oder Halbleiterspeichern, welche in beträchtlicher Speicherkapazität und bei vergleichsweise niedrigem Preis im Handel erhältlich sind. Die Steuereinheit bewirkt beim Füllen der Speichermittel mit den durch die Dateneingabevorrichtung von Meßwertgebern, Eingabestationen, Eingabetastaturen und dergleichen bezogenen Daten, daß bestimmte dieser Daten in den Speichermitteln mit Leitadressen abgespeichert werden, so daß es beim Herauslesen des Speichers möglich ist, die Daten gruppenweise zu ordnen und einzelne Gruppen jeweils getrennten Speichern bzw. getrennten Datenträgern zuzuführen. Dies geschieht jedoch bei der Ausführungsform nach Figur 2 nicht am Orte des einzelnen Milchsammelwagens, sondern in einer einzigen Konvertiereinrichtung 8 am Orte der Sammelstelle. Fährt der Milchsammelwagen 1 in die Sammelstelle 2 ein, so wird eine Kabelverbindung zwischen dem Sammelwagen und der Sammelstelle gelegt, welche in Figur 2 schematisch bei 13 angedeutet ist. Anstelle der Kabelverbindung kann eine drahtlose Funkverbindung oder eine Telefonverbindung dazu dienen, die Speichermittel des Registriergerätes des Milchsammelwagens mit der Konvertiereinrichtung 8 zu verbinden. über die Verbindung 13 wird der Speicherinhalt des sammelwagenseitigen Speichers entleert und gelangt über eine auf die erwähnten Leitadressen ansprechende Auswähleinrichtung 14 sowie den Konvertiereinheiten 9 und 10 der Ausführungsform nach Figur 1 entsprechende Umformungseinheiten 9' bzw. 10' zu den körperlich aus der Konvertiereinrichtung entnehmbaren Speichern mit Datenträgern 11 und 12.

Die Einrichtungen auf dem Milchsammelwagen 1 der Ausführungsform nach Figur 3 entsprechen im wesentlichen denjenigen der Ausführungsform nach Figur 1, doch sind die Datenträger der Speichermittel des Registriergerätes des Milchsammelwagens nicht körperlich aus dem Registriergerät entnehmbar, sondern, ähnlich wie die Speichermittel bei der Ausführungsform nach Figur 2, in Gestalt von Festkörperspeichern oder Halbleiterspeichern fest im Gerät installiert. Die eine Auswähleinrichtung enthaltende Steuereinheit nimmt also wiederum die Verteilung der anfallenden Daten auf die Speicher 5 und 6 vor, so daß die Grunddaten und die während des Einsammelns einer Lieferung anfallenden Daten wie Lieferantennummer und diverse Meßdaten, soweit sie unmittelbar in der zentralen Datenverarbeitungsanlage bzw. der Abrechnungsstelle benötigt werden, im Speicher 5 angesammelt werden, während Grunddaten, Liefereantennummer und Meßdaten, welche unmittelbar zusammen mit den genommenen Proben im Analyselabor benötigt werden und dort eine Ergänzung durch die Analysedaten erfahren, in dem Speicher 6 angesammelt werden.

Fährt der Milchsammelwagen in die Sammelstelle ein, so werden zwei Leitungsverbindungen 13a und 13b von dem Speicher 5 zu einem Anschluß 15 und von dem Speicher 6 zu einem Anschluß 16 der Konvertiereinrichtung 8 verlegt. Ein Verwechseln der Anschlüsse wird durch entsprechende Formung beispielsweise der Kupplungen oder Verbinder sicher verhindert. Die jeweiligen Speicherinhalte werden dann über Umformungseinheiten 9' bzw. 10' auf die Speicher 11 und 12 mit den jeweils körperlich entnehmbaren und mit den zu versorgenden Anlagen maschinenkompatiblen Datenträgern übertragen.

## Patentansprüche

1. Datenregistriersystem zur Erfassung der Daten von bestimmten Gutmengen, insbesondere von Milchlieferungen, welche an Lieferstellen mittels eines Sammeltransportfahrzeugs eingesammelt und zu einer Sammelstelle gebracht werden, mit einem im Sammeltransportfahrzeug befindlichen Registriergerät, welches Dateneingabevorrichtungen, eine damit verbundene Steuereinheit und mit dieser gekoppelte Speichermittel enthält, ferner mit mindestens zwei ortsfest aufgestellten Datenlese- und/oder Datenschreib und/oder -verarbeitungsgeräten und mit Mitteln zur Übertragung des Inhaltes der Speichermittel auf die mindestens zwei Datenlese- und/oder Datenschreib- und/oder -verarbeitungsgeräte, dadurch gekennzeichnet, daß die Mittel zur Übertragung des Dateninhaltes der Speichermittel (5,6) eine Konvertiereinrichtung (8) enthalten, welcher eingangsseitig der Dateninhalt der Speichermittel zuführbar ist und welche ausgangsseitig diesen Dateninhalt auf gesonderten, aus der Konvertiereinrichtung körperlich entnehmbaren, zur Ergänzung bzw. Verarbeitung in einem jeweils zugeordneten der Datenlese- und/oder Datenschreib- und/oder -verarbeitungsgeräte bestimmten Datenträgern (11, 12) darbietet oder welche ausgangsseitig den einen Dateninhalt auf einem aus der Konvertiereinrichtung körperlich entnehmbaren, zur Ergänzung bzw. Verarbeitung in einem der ortsfest aufgestellten Datenlese- und/oder Datenschreib- und/oder -verarbeitungsgeräte zugeordneten Datenträger darbietet und den anderen Dateninhalt direkt über eine Funk- oder Leitungs- bzw. Telefonverbindung dem anderen der ortsfest aufgestellten Datenlese- und/oder Datenschreib- und/oder Datenverarbeitungsgeräte zuleitet.

2. Datenregistriersystem nach Anspruch 1, dadurch gekennzeichnet, daß die Konvertiereinrichtung (8) eingangsseitig oder die Konvertiereinrichtung und das eine der mindestens zwei ortsfest aufgestellten Datenlese- und/oder Datenschreib- und/oder Datenverarbeitungsgeräte getrennt über eine Funkverbindung oder Leitungsverbindung (13 bzw. 13a. 13b) mit dem Registriergerät des Sammeltransportfahrzeugs (1) koppelbar sind.

3. Datenregistriersystem nach Anspruch 1, dadurch gekennzeichnet, daß die Speichermittel (5, 6) des Registriergerätes des Sammeltransportfahrzeugs (1) von diesem entnehmbar und in die Konvertiereinrichtung (8) einsetzbar sind (Figur 1).

4. Datenregistriersystem nach einem der Ansprüche 1 bis 3, dadurch gekennzeichnet, daß eine Auswähl- und Verteilvorrichtung (4 bzw. 14) zur Aufteilung des Inhaltes der Speichermittel (5, 6) in Datengruppen dient, welche jeweils einem der Datenträger (11, 12) der Konvertiereinrichtung (8) zuleitbar sind.

5. Datenregistriersystem nach Anspruch 4, dadurch gekennzeichnet, daß die Auswähl- und Verteilvorrichtung (4) sich im Registriergerät des Sammeltransportfahrzeugs (1) befindet.

6. Datenregistriersystem nach Anspruch 5, dadurch gekennzeichnet, daß die Verteilung durch die Auswähl- und Verteilvorrichtung (4) auf gesonderte Speicher oder Speicherabschnitte des Registriergerätes des Sammeltransportfahrzeugs erfolgt.

7. Datenregistriersystem nach Anspruch 5, dadurch gekennzeichnet, daß die Verteilung der Daten durch die Auswähl- und Verteilvorrichtung auf getrennte, mit der Konvertiereinrichtung (8) jeweils koppelbare Ausgänge erfolgt.

8. Datenregistriersystem nach Anspruch 4, dadurch gekenn-

zeichnet, daß sich die Auswähl- und Verteilvorrichtung (14) in der Konvertiereinrichtung (8) deren Eingang nachgeschaltet befindet, und von Leitadreßbefehlen der übertragenen Daten gesteuert ist.

9. Datenregistriersystem nach einem der Ansprüche 1 oder 2 oder 4 bis 8, dadurch gekennzeichnet, daß die Speichermittel des Registriergerätes des Sammeltransportfahrzeugs (1) von Festkörperspeichern oder Halbleiterspeichern oder Magnetic Bubbles oder Magnetbandkassetten oder Metallbandkassetten gebildet sind.

0055806

1/1

FIG. 1

Zentrale EDV

Analyse

Sammelstelle

FIG. 2

Zentrale EDV

Analyse

Sammelstelle

FIG. 3

Zentrale EDV

Analyse

Sammelstelle